Europäisches Patentamt

European Patent Office

Office européen des brevets

(11) Publication number: **0 104 695**
**B1**

(12) **EUROPEAN PATENT SPECIFICATION**

(45) Date of publication of patent specification: 26.04.89

(21) Application number: **83201295.9**

(22) Date of filing: **08.09.83**

(51) Int. Cl.⁴: **C 08 L 51/04, C 08 L 69/00 //**
**(C08L51/04, 69:00, 25:02,**
**75:04),(C08L69/00, 51:04,**
**25:02, 75:04)**

(54) **Polymer composition.**

(30) Priority: **11.09.82 NL 8203542**

(43) Date of publication of application:
**04.04.84 Bulletin 84/14**

(45) Publication of the grant of the patent:
**26.04.89 Bulletin 89/17**

(84) Designated Contracting States:
**AT BE CH DE FR GB IT LI NL SE**

(56) References cited:
**DE-A-1 170 141**
**FR-A-2 371 485**
**GB-A-1 363 402**
**NL-A-7 300 479**
**US-A-3 431 224**
**US-A-4 107 131**

The file contains technical information
submitted after the application was filed and
not included in this specification

(73) Proprietor: **STAMICARBON B.V.**
**Mijnweg 1**
**NL-6167 AC Geleen (NL)**

(72) Inventor: **Frencken, Eduard Jozef**
**van Oldenbarneveldstraat 22**
**NL-6181 BD Elsloo (L.) (NL)**
Inventor: **Hoen, Nicolaas Gerard Marie**
**Hugo de Grootstraat 1**
**NL-6181 BG Elsloo (L.) (NL)**
Inventor: **Drummen, Theodorus Barbera**
**Renatus**
**Heisterberg 1**
**NL-6431 JA Hoensbroek (NL)**

Courier Press, Leamington Spa, England.

**Description**

The invention relates to a polymer composition based on a polycarbonate, a graft copolymer and a polyurethane.

Such a polymer composition is known from the Netherlands patent application 7300479 laid open to public inspection. This application relates to a polymer composition consisting of a predominating quantity (more than 90%) of polycarbonate, a small quantity (less then 2%) of graft copolymer and a modifier, such as polyethylene or a polyurethane elastomer.

From various publications it is known that mixtures of polycarbonate (PC) with a graft copolymer of styrene and acrylonitrile on a rubber (ABS) have favourable properties. Examples of such publications are the German patent specifications 1,170,141 and 1,810,993, the Netherlands patent applications 7316731 and 7316733 laid open to public inspection, or the European patent applications 146, 5.202 and 51.336 laid open to public inspection.

The ABS/PC compositions have favourable properties as to their processability, heat resistance and impact resistance at room temperature. These properties make these compositions particularly suitable for all sorts of uses in motor cars, such as dashboards, bumpers, grills and other car parts.

It has been found, however, that the resistance of these polymer compositions to organic solvents, such as petrol, may not be satisfactory. This resistance to petrol is not only of great importance for various, particularly exterior, car parts, but also for, for instance, helmets.

One of the objects of the present invention is to provide a polymer composition combining the said favourable properties of ABS/PC compositions with this good petrol resistance.

According to the invention such a polymer composition comprises

A. 5—90% (wt) of a combination of
A.1. one or more graft copolymers obtained by polymerizing
    10—90 parts by weight of a monomer mixture consisting of
    20—40% (wt) acrylic compound,
    60—80% (wt) vinylaromatic compound, and
    0—20% (wt) of one or more other unsaturated compounds, in the presence of 10—90 parts by weight rubber, and
A.2. one or more graft copolymers obtained by polymerizing
    10—90 parts by weight of a monomer mixture consisting of
    20—40% (wt) acrylic compound,
    60—80% (wt) vinylaromatic compound, and
    0—20% (wt) of one or more other unsaturated compounds in the presence of 10—90 parts by weight rubber, the difference in rubber content between component A.1. and A.2. being at least 5 parts by weight per 100 parts by weight of graft copolymer,
B. 0—70% (wt) of one or more copolymers obtained by polymerizing
    60—80 parts by weight vinylaromatic compounds,
    20—40 parts by weight acrylic compounds,
    0—20 parts by weight of one or more other unsaturated compounds,
C. 5—90% (wt) of one or more polycarbonates, and
D. 0.5—25% (wt) of one or more polyurethanes.

Surprisingly, it has been found that, when combining the ABS/PC composition with one or more polyurethanes, a product is obtained showing, in addition to the good petrol resistance, very good processing characteristics, too. The flow behaviour in particular is improved upon considerably.

The petrol resistance of polymer compositions is determined by so bending on a die, tensile test bars moulded from the compositions to be tested that an elongation of $\varepsilon=0.7\%$ occurs. These pre-bent tensile test bars are subsequently submerged under this load in a testing medium of the following compositions 42.5 volume% 2,2,4 trimethylpentane, 42.5 volume% toluene and 15 volume% methanol. After 5 minutes the bars are taken from the testing medium, upon which the testing medium evaporates. After 24 hours the test bars are subjected to a tensile test according to DIN 53455. Subsequently, the elongations at break of these test bars are compared with elongations at break of test bars not submerged in the testing medium (Plastverarbeiter 33, 1982, 9, 1071).

From, for instance, the published Netherlands patent application 8003798 it is known that the processing characteristics are related to the spiral flow length.

Moreover, the composition according to the invention has an improved resistance to UV radiation, as well as to wear.

The gloss of the composition is lower than that of the ABS/PC composition, which is favourable particularly for uses in the automotive industry.

Effective acrylic compounds for use in the present invention are acrylonitrile, methacrylonitrile alkylacrylate, alkylmethacrylate or mixtures thereof. Preference is given to acrylonitrile in graft copolymer A and/or copolymer B.

Effective vinylaromatic compounds are styrene and substituted styrene compounds, such as α-methylstyrene, p-vinyltoluene, halogenated styrene or mixtures thereof. Preference is given to the use of styrene or α-methylstyrene.

In certain cases preference may have to be given to using styrene as well as α-methylstyrene, in which cases it may be convenient particularly to use styrene in the graft copolymer and α-methylstyrene in the copolymer, or the reverse.

The rubber content of the graft copolymer is preferably between 15 and 50 parts by weight, preferably between 15 and 40 parts by weight, per 100 parts by weight of the graft copolymer.

In connection with achieving an optimum ratio between impact resistance and processing characteristics (flow) it is advantageous to use two or more graft copolymers having a difference in rubber content of at least 5 parts by weight per 100 parts by weight of graft copolymer.

Although in principle all rubbers having a glass transition temperature lower than −30°C can be used, preference is given to rubbers having a glass transition temperature lower than −55°C, because the impact resistance of the graft copolymer component tends to decrease in the neighbourhood of the glass transition temperature.

More particularly a butadiene rubber is used, such as polybutadiene, butadiene-styrene, butadiene-acrylonitrile or butadieneacrylate rubber.

In connection with, for instance, the resistance to UV radiation, it may be desirable, however, to deviate from said considerations and to choose another rubber, such as an EPDM rubber, as a grafting basis. This may then be at the expense, however, of the impact resistance at very low temperature.

In principle all thermoplastic polycarbonates are suitable for the compositions of the invention. Polycarbonates are known per se and can be obtained by conversion of dihydroxy or polyhydroxy compounds with phosgene or diesters of carbonic acid.

Particularly effective dihydroxy compounds are dihydroxydiarylalkanes, including those compounds that contain alkyl groups or chlorine atoms or bromine atoms at the ortho position in respect of the hydroxyl group.

The following compounds are dihydroxydiarylalkanes which are to be preferred: 4,4' - dihydroxy 2,2 diphenylpropane (bisphenol A), tetramethylbisphenol A, tetrachlorobisphenol A, tetrabromobisphenol A and bis - (4 - hydroxyphenyl) p - diisopropylbenzene. In addition to the polycarbonates, which can be prepared only from dihydroxydiarylalkanes, it is also possible to apply branched polycarbonates. For the preparation of polycarbonates of this grade part of the dihydroxy compound, for instance 0.2—2 moles%, is replaced by a polyhydroxy compound.

Polycarbonates of the aforementioned grade are described, for instance, in the United States patent specifications 3,028,365; 2,999,835; 3,148,172; 3,271,368; 2,970,137, 2,991,273; 3,271,367; 3,280,078; 3,014,891 and 2,999,846.

If the polymer composition must have flame-retarding properties, the whole or part of the polycarbonate component can advantageously consist of halogenated polycarbonate.

The polycarbonate can be prepared as known per se, for instance as described in said patents.

For the preparation of the graft copolymer, as well as the copolymer, the various known polymerization techniques can be applied, such as emulsion, suspension, mass and solution polymerization or combinations thereof, such as mass-suspension, emulsion-mass and emulsion-suspension polymerization.

For the preparation of the graft copolymers preferernce is given to emulsion polymerization. In applying this technique very good high-impact-resistant products are obtained in a simple manner.

The copolymer is preferably prepared in emulsion or suspension.

In the emulsion polymerization process the usual techniques can be applied for the graft copolymers, as well as for the copolymer.

In the polymerization in aqueous emulsion the usual auxiliaires required for that purpose must be used, such as emulsifiers, lye, salts, soaps, initiators, such as peroxides, and chain length regulators.

Suitable chain length regulators are organosulphur compounds, such as the much used mercaptans, as well as the dialkyldixanthogens, diarylsulphides, mercaptothiazoles, tetra-alkylthiuram monosulfides and tetra-alkylthiuram disulphides and the like, separately or mixed together, as well as hydroxyl compounds, such as terpinolenes. In addition, the dimer of α-methyl-styrene or an α-alkene with relatively long chain can be used as well.

The commercially most usual chain length regulators are particularly the mercapto compounds, and of these the hydrocarbylmercaptans with 8—20 carbon atoms per molecule are now much used. More specifically preference is given to mercaptans with a tertiary alkyl group.

The quantity of organosulphur compund may vary within wide limits, depending on the mixture chosen, the specific compound, polymerization temperature, emulsifier and other variables relating to the recipe. A good result can be achieved by using 0.01—5 parts by weight (per 100 parts by weight of monomer) of organosulphur compound, in which use preference is given to 0.05—2 parts. Suitable organosulphur compounds comprise n-octylmercaptan, n-dodecylmercaptan, tertiary dodecylmercaptan, tertiary nonylmercaptan, tertiary hexadecylmercaptan, tertiary octadecylmercaptan, tertiary eicosylmercaptan, secondary octylmercaptan, secondary tridecylmercaptan, cyclododecylmercaptan, cyclododecadienylmercaptan, arylmercaptan, such as 1-naphthalenethiol and the like, bis(tetra-methylthiuramdisulphide), 2-mercaptobenzathiazole and the like. Mixtures of these compounds can also be used.

As emulsifier widely different compounds can be used, such as disproportionated rosin soap, fatty acid soap, mixtures of these compounds, arylsulphonates, alkylarylsulphonates and other surface-active compounds and mixtures thereof. Non-ionogenic emulsifiers, such as polyethers and polyols, can also be used. The quantities of the emulsifiers used depend on the grade, as well as on the reaction parameters and the concentrations of polymerizable monomer in the emulsion polymerization system.

For the emulsion polymerization process suitable compounds supplying free radicals are organic or inorganic peroxides, hydroperoxides, azo compounds, as well as redox initiator systems. These compounds can be added at the beginning of the polymerization process. It is possible also to add these compounds partly at the beginning and partly in the course of the polymerization process.

Preferably alkali- or ammoniumpersalts and/or redox systems are chosen as initiators. Mention must be made in particular of potassiumpersulphate, ammoniumpersulphate and sodiumpersulphate. Examples of suitable redox systems are persalts (for instance perchlorates or persulphates), tertiary butylhydroperoxide, cumenehydroperoxide, diisopropylbenzenehydroperoxide and methyl-cyclohexylhydroperoxide, combined with reductants based on acids containing sulphur in a low valency condition, such as sodiumformaldehydesulphoxylate, bisulphide, pyrosulphide, or with organic bases, such as triethanolamine, with dextrose, sodiumpyrophosphate and mercaptans or combinations thereof, optionally in combination with metal salts, such as ferrous sulphate. These initiators or initiator systems can be fed in one single dose, by steps or even gradually.

If the copolymer is prepared in suspension, the auxiliaries customary for this process are used, such as suspending agents, chain length regulators and compounds supplying free radicals.

Suitable suspending agents are polyvinyl alcohols, partly saponified polyvinylacetate, metalphosphate compounds that are hard to dissolve and the like. The chain length regulators and the compounds supplying free radicals can in principle be the same as in emulsion polymerization.

In order to obtain a polymer composition having a good impact resistance preference is given to starting from a rubber latex having a weight-average particle size ($d_{50}$, determined with electron microscope) ranging from 0.05 to 0.70 µm.

This, therefore, means that the preparation of the graft copolymer in such a case must be effected at least partly in emulsion.

The process according to which this rubber latex is prepared is preferably so controlled that highly cross-linked products are obtained.

The gel content should preferably be higher than 70% by weight (determined in methylethylketone or toluene). With a high butadiene content of the rubber, this degree of crosslinking can be obtained by polymerizing to high degrees of conversion or by applying cross-linking agents, i.e. ethyleneglycoldimethacrylate.

If for the graft copolymerization no use is made of emulsion polymerization, rubbers prepared from solutions thereof in organic solvents can be used as well. In that case, however, it is desirable for the graft polymerization reaction to be performed for instance in the form of a mass-suspension polymerization reaction.

In those cases in which the rubbers are prepared by emulsion polymerization the emulsifiers, activators and polymerization auxiliaries used for the preparation of the copolymer or graft copolymers can be applied.

Before the grafting reaction, the rubber latex must be degassed in order to suppress undesired reactions initiated by non-converted monomer.

Preference is given to the use of polybutadiene homopolymers or butadiene copolymers with a butadiene content of more than 60% by weight. If other dienes, for instance isoprene, or the lower alkylesters of acrylic acid, are used as comonomers, the butadiene content of the rubber can be reduced to 30% by weight without any disadvantage occurring with respect to the properties of the polymer composition.

In principle it is also possible to prepare the graft copolymers from saturated rubbers, for instance from ethylenevinylacetate copolymers with a vinylacetate content lower than 50% or from ethylenepropylene-diene terpolymers (these dienes are not conjugated; examples are: 1,4 hexadiene, ethylidene norbornene, dicyclopentadiene), as well as acrylate rubber, chlorinated polyethylene or chloroprene rubber. Mixtures of two or more rubbers can be applied as well.

The polyurethane may be elastomeric polyurethanes known in the art. These polyurethanes can be prepared by reaction of a diisocyanate and one or more dihydroxy compounds.

The dihydroxy compounds may be the polyoxyalkyleneglycols built up from C2—4 oxyalkylene units, such as polyethyleneglycol, polypropyleneglycol and polytetramethyleneglycol, polylactonediols derived from a lactone containing 5—12 C atoms, such as for instance hydroxyl-terminated polycaprolactone, polyoenantholactone, polyvalerolactone or copolylactones and hydroxyl-terminated polyesters.

In some embodiments a low-molecular diol is used in addition to the said diol, which low-molecular diol can function as chain length regulator. Dihydroxyl compounds having a molecular weight of between 60 and 200 can be used. Examples are aliphatic unbranched diols, such as ethyleneglycol, 1,4-butanediol and 1,6-hexanediol, branched diols, such as 1,2-propyleneglycol and 2,2-dimethylbutanediol 1,4 low-molecular polyalkyleneglycols, such as diethyleneglycol, triethyleneglycol, or cycloaliphatic diols, such as 1,4-(hydroxymethyl)-cyclohexane.

The diisocyanates are the usual aromatic, aliphatic or cycloaliphatic compounds in pure or crude form,

4

such as toluenediisocyanates, 4,4'diisocyanatediphenylmethane, polyarylenepolyphenylisocyanates, isophoronediisocyanate and hexamethylene diisocyanate. The quantity of diisocyanate used is such that the total NCO/OH ratio is about 1:1, for instance 1.00:1 to 1.05:1.

Generally one or more catalysts accelerating the isocyanate reactions are used also.

The most usual types are the polyamino compounds, for instance triethylenediamine, and tin-containing compounds, for instance dibutyltindiacetate or -dilaurate.

The polyurethane component of the polymer composition has preferably been prepared on the basis of one or more polyesters with hydroxyl end groups. These polyesters in their turn may have been prepared either by condensation of approximately equivalent quantities of a glycol and a dicarboxylic acid (or an anhydride thereof), or by reaction of a lactone having at least 6 carbon atoms in the lactone ring and a small quantity of bifunctional initiator, such as glycol and aminoalcohol or a diamine. In any case preference is given to the use of a polyester having a relatively high molecular weight, i.e. having a molecular weight of at least 1000.

In the condensation of a glycol and a dicarboxylic acid the glycol preferably contains 2—6 carbon atoms. Suitable glycols are ethylene, tri-methylene, tetra-methylene, hexene and propyleneglycols. The dicarboxylic acid is preferably aliphatic and contains 2—8 carbon atoms, preferably cinnamic acid, glutaric acid, adipic acid and the like. This condensation polymerization of these polyesters is performed as known in the art.

If the polyester is prepared on the basis of a lactone, preference is given to the use of caprolactone. The polymerization can then be effected in a simple manner by mixing the lactone in the bifunctional initiator at elevated temperature, for instance between 120—200°C. Preference is given to the use of a catalyst with a concentration of about 1/1000 to 1/2% (wt). Various catalysts known in the art can be used. More detailed information about the preparation of polyesters on the basis of lactones can be found in the US patents 2,933,477 and 2,933,478.

The linear dihydroxypolyesters described above can be reacted with an excess of a preferably aromatic diisocyanate, such as 4,4' diphenylmethanediisocyanate (MDI) or toluenediisocyanate (TDI). In this reaction, which is performed preferably at a temperature of between 80—120°C, a prepolymer is obtained consisting of a mixture of the excess of unreacted diisocyanate and a diisocyanate-terminated polymer diol. This mixture can then be reacted with a chain length regulator in such ratios that all free isocyanate groups have reacted. The chain length regulator may be a glycol having a low molecular weight, such as ethyleneglycol, 1,4-butadienediol and 1,6 hexamethyleneglycol.

A very suitable polyurethane according to the present invention can be prepared from 1 molar equivalent of a dihydroxypolyester, 6 molar equivalents diisocyanate and 5 molar equivalents chain length regulator. Generally preference is given to applying 2—6 moles diisocyanate per mole dihydroxypolyester.

The polyurethanes applied may be crosslinked. This can be achieved in a simple manner by using a slight excess of diisocyanate or by applying a trivalent or polyvalent compound.

The polymer composition may also contain various additives, such as pigments, fillers, stabilizers, antioxidants, lubricants, antistatics, flame retarders and the like.

The invention is elucidated by means of the following Examples.

Comparative Example 1 and Examples 2 and 3

Starting from a polycarbonate based on bisphenol A and carboxylic acid with an impact resistance of 80 according to ASTM D 256, an ABS with 37.5% (wt) polybutadiene rubber and a copolymer of styrene and acrylonitrile (SAN), a number of mixtures were made.

The ABS was made as follows. 37.5 parts by weight polybutadiene latex (based on solid matter), 41.5 parts by weight styrene and 21 parts by weight acrylonitrile and 0.4 part by weight tertiary dodecylmercaptan were added to the reactor, which already contained water and rosin soap emulgator solution.

Subsequently, cumenehydroperoxide with an activator system was added and the polymerization was started.

After the polymerization the latex obtained was coagulated by means of calcium chloride. After washing out and drying, an ABS powder with 35% (wt) polybutadiene was obtained.

The copolymer of styrene and acrylonitrile (SAN) (wt. ratio 70/30) was made as follows. Styrene and acrylonitrile were put in a reactor together with water and a suspension stabilizer. After addition of an oil-soluble initiator the reaction was started.

After completion of the reaction, the stabilizer was washed out by means of HCl and water.

As already descirbed in, inter alia, the Netherlands patent apaplication 8003798, the processing characteristics are related to the spiral flow length.

The spiral flow length, in this connection, is the distance in centimetres which a polymer melt having a temperature of 240°C on entry of mould covers, under an initial pressure of 742 kg/cm$^2$, in a mould kept at 80°C. This mould has ducts with a width of 20 mm and a thickness of 3 mm (flat spiral length: H. Ebneth, K. Böhm, Plastverarbeiter, 191, 1968, pp. 261—269).

Comparative Example 1

Starting from 4000 parts by weight ABS, 1000 parts by weight SAN and 5000 parts by weight

polycarbonate, a mixture was prepared from which test plates were injection-moulded. During the petrol resistance test described the test plates show an elongation of 18%. Of this mixture the spiral flow was measured according to the method described. The spiral flow length proved to be 46.9 cm.

Example 2

Starting from 3800 parts by weight ABS, 950 parts by weight SAN and 4750 parts by weight polycarbonate, a second mixture was prepared with 500 parts by weight of a polyurethane (Estane 58137, Goodrich) added thereto as well. Of this mixture the petrol resistance and the spiral flow were measured. These showed a substantial improvement compared with the results of Example 1. For the results see table.

Example 3

This example was carried out in the same manner as Example 2 except, however, that the quantities of the parts by weight were 3400 parts by weight ABS, 850 parts by weight SAN, 4250 parts by weight polycarbonate and 1500 parts by weight polyurethane. For the results see table.

TABLE

| Example | ABS | SAN | Polyca-bonate | Polyure-thane | Petrol resistance | | Spiral flow length |
|---|---|---|---|---|---|---|---|
| | pts(wt) | pts(wt) | pts(wt) | pts(wt) | blank elong. % without submer-sion | $\varepsilon=0.7\%$ elong. % with submer-sion | cm |
| 1 | 4000 | 1000 | 5000 | 0 | 98 | 18 | 46.9 |
| 2 | 3800 | 950 | 4750 | 500 | 103 | 106 | 63.2 |
| 3 | 3400 | 850 | 4250 | 1500 | 110 | 151 | 88.5 |

**Claims for the Designated States: BE, CH, DE, FR, GB, IT, LI, NL, SE**

1. Polymer composition based on a polycarbonate, a graft copolymer and a polyurethane, characterized in that the polymer composition comprises:

A. 5—90% (wt) of a combination of

A.1. one or more graft copolymers obtained by polymerizing 10—90 parts by weight of a monomer mixture consisting of 20—40% (wt) acrylic compound, 60—80% (wt) vinylaromatic compound, and

0—20% (wt) of one or more other unsaturated compounds, in the presence of 10—90 parts by weight rubber, and

A.2. one or more graft copolymers obtained by polymerizing 10—90 parts by weight of a monomer mixture consisting of 20—40% (wt) acrylic compound, 60—80% (wt) vinylaromatic compound, and

0—20% (wt) of one or more other unsaturated compounds in the presence of 10—90 parts by weight rubber, the difference in rubber content between components A.1. and A.2. being at least 5 parts by weight per 100 parts by weight of graft copolymer,

B. 0—70% (wt) of one or more copolymers obtained by polymerizing 60—80 parts by weight vinylarmatic compounds, 20—40 parts by weight acrylic compounds, 0—20 parts by weight of one or more other unsaturated compounds,

C. 5—90% (wt) of one or more polycarbonates, and

D. 0.5—25% (wt) of one or more polyurethanes.

2. Polymer composition according to claim 1, characterized in that the acrylic compound in A and/or B is acrylonitrile.

3. Polymer composition according to claim 1 or 2, characterized in that the vinylaromatic compound in A and/or B is styrene and/or α-methylstyrene.

4. Polymer composition according to any one of claims 1—3, characterized in that the rubber content of

6

A.1. is between 15 and 50 parts by weight, preferably between 15 and 40 parts by weight, per 100 parts by weight of graft copolymer.

5. Polymer composition according to any one of claims 1—4, characterized in that the rubber content of A.2. is between 15 and 50 parts by weight, preferably between 15 and 40 parts by weight, per 100 parts by weight of graft copolymer.

## Claims for the Contracting State: AT

1. Process for preparing a polymer composition based on a polycarbonate, a graft copolymer and a polyurethane, characterized in that the polymer composition is prepared by combining:

A. 5—90% (wt) of a combination of

A.1. one or more graft copolymers obtained by polymerizing
10—90 parts by weight of a monomer mixture consisting of
20—40% (wt) acrylic compound,
60—80% (wt) vinylaromatic compound, and
0—20% (wt) of one or more other unsaturated compounds, in the presence of 10—90 parts by weight rubber, and

A.2. one or more graft copolymers obtained by polymerizing
10—90 parts by weight of a monomer mixture consisting of
20—40% (wt) acrylic compound,
60—80% (wt) vinylaromatic compound, and
0—20% (wt) of one or more other unsaturated compounds in the presence of 10—90 parts by weight rubber, the difference in rubber content between components A.1. and A.2. being at least 5 parts by weight per 100 parts by weight of graft copolymer,

B. 0—70% (wt) of one or more copolymers obtained by polymerizing
60—80 parts by weight vinylaromatic compounds,
20—40 parts by weight acrylic compounds,
0—20 parts by weight of one or more other unsaturated compounds,

C. 5—90% (wt) of one or more polycarbonates, and

D. 0.5—25% (wt) of one or more polyurethanes.

2. Process according to claim 1, characterized in that the acrylic compound in A and/or B is acrylonitrile.

3. Process according to claim 1 or 2, characterized in that the vinylaromatic compound in A and/or B is styrene and/or α-methylstyrene.

4. Process according to any one of claims 1—3, characterized in that the rubber content of A.1. is between 15 and 50 parts by weight, preferably between 15 and 40 parts by weight, per 100 parts by weight of graft copolymer.

5. Process according to any one of claims 1—4, characterized in that the rubber content of A.2. is between 15 and 50 parts by weight, preferably between 15 and 40 parts by weight, per 100 parts by weight of graft copolymer.

## Patentansprüche für die Vertragsstaaten: BE, CH, DE, FR, GB, IT, LI, NL, SE

1. Polymerzusammensetzung auf Basis eines Polycarbonats, eines Pfropfcopolymers und eines Polyurethans, dadurch gekennzeichnet, daß die Polymerzusammensetzung

A. 5 bis 90% (Gew.) einer Kombination

A.1. eines oder mehrerer Pfropfcopolymere, erhalten durch Polymerisieren von
10 bis 90 Gew. Teilen einer Monomermischung bestehend aus
20 bis 40% (Gew.) Acrylverbindung,
60 bis 80% (Gew.) vinylaromatischer Verbindung und
0 bis 20% (Gew.) einer oder mehrerer anderer ungesättigter Verbindungen in Anwesenheit von 10 bis 90 Gew. Teilen Kautschuk, und

A.2. eines oder mehrerer Pfropfcopolymere, erhalten durch Polymerisieren von
10 bis 90 Gew.Teilen einer Monomermischung bestehend aus
20 bis 40% (Gew.) Acrylverbindung,
60 bis 80% (Gew.) vinylaromatischer Verbindung und
0 bis 20% (Gew.) einer oder mehrerer anderer ungesättigter Verbindungen in Anwesenheit von 10 bis 90 Gew. Teilen Kautschuk, wobei der Unterschied im Kautschukgehalt zwischen den Komponenten A.1. und A.2. mindestens 5 Gew.Teile pro 100 Gew.Teile Pfropfcopolymer beträgt,

B. 0 bis 70% (Gew.) eines oder mehrerer Copolymere erhalten durch Polymerisieren von
60 bis 80 Gew.Teilen vinylaromatischer Verbindungen,
20 bis 40 Gew.Teilen Acrylverbindungen und
0 bis 20 Gew.Teilen einer oder mehrere anderer ungesättigter Verbindungen,

C. 5 bis 90% (Gew.) eines oder mehrerer Polycarbonate und

D. 0,5 bis 25% (Gew.) eines oder mehrerer Polyurethane umfaßt.

2. Polymerzusammensetzung nach Anspruch 1, dadurch gekennzeichnet, daß die Acrylverbindung in A und/oder B Acrylnitril ist.

3. Polymerzusammensetzung nach Anspruch 1 oder 2, dadurch gekennzeichnet, daß die vinylaromatische Verbindung in A und/oder B Styrol und/oder α-Methylstyrol ist.

4. Polymerzusammensetzung nach einem der Ansprüche 1 bis 3, dadurch gekennzeichnet, daß der Kautschukgehalt von A.1. 15 bis 50 Gew.Teile, vorzugsweise 15 bis 40 Gew.Teile, pro 100 Gew.Teile Pfropfcopolymer beträgt.

5. Polymerzusammensetzung nach einem der Ansprüche 1 bis 4, dadurch gekennzeichnet, daß der Kautschukgehalt von A.2. 15 bis 50 Gew.Teile, vorzugsweise 15 bis 40 Gew.Teile, pro 100 Gew.Teile Pfropfcopolymer beträgt.

**Patentansprüche für den Vertragsstaat: AT**

1. Verfahren zum Herstellen einer Polymerzusammensetzung auf Basis eines Polycarbonats, eines Pfropfcopolymers und eines Polyurethans, dadurch gekennzeichnet, daß die Polymerzusammensetzung durch Vereinigen von

A. 5 bis 90% (Gew.) einer Kombination

A.1. eines oder mehrerer Pfropfcopolymere, erhalten durch Polymerisieren von 10 bis 90 Gew.Teilen einer Monomermischung bestehend aus 20 bis 40% (Gew.) Acrylverbindung, 60 bis 80% (Gew.) vinylaromatischer Verbindung und 0 bis 20% (Gew.) einer oder mehrerer anderer ungesättigter Verbindungen in Anwesenheit von 10 bis 90 Gew.Teilen Kautschuk, und

A.2. eines oder mehrerer Pfropfcopolymere, erhalten durch Polymerisieren von 10 bis 90 Gew.Teilen einer Monomermischung bestehend aus 20 bis 40% (Gew.) Acrylverbindung, 60 bis 80% (Gew.) vinylaromatischer Verbindung und 0 bis 20% (Gew.) einer oder mehrerer anderer ungesättigter Verbindungen in Anwesenheit von 10 bis 90 Gew.Teilen Kautschuk, wobei der Unterschied im Kautschukgehalt zwischen den Komponenten A.1. und A.2. mindestens 5 Gew.Teile pro 100 Gew.Teile Pfropfcopolymer beträgt,

B. 0 bis 70% (Gew.) eines oder mehrerer Copolymere erhalten durch Polymerisieren von 60 bis 80 Gew.Teilen vinylaromatischer verbindungen, 20 bis 40 Gew.Teilen Acrylverbindungen und 0 bis 20 Gew.Teilen einer oder mehrerer anderer ungesättigter Verbindungen,

C: 5 bis 90% (Gew.) eines oder mehrerer Polycarbonate und

D. 0,5 bis 25% (Gew.) eines oder mehrerer Polyurethane hergestellt wird.

2. Verfahren nach Anspruch 1, dadurch gekennzeichnet, daß die Acrylverbindung in A und/oder B Acrylnitril ist.

3. Verfahren nach Anspruch 1 oder 2, dadurch gekennzeichnet, daß die vinylaromatische Verbindung in A und/oder B Styrol und/oder α-Methylstyrol ist.

4. Verfahren nach einem der Ansprüche 1 bis 3, dadurch gekennzeichnet, daß der Kautschukgehalt von A.1. 15 bis 50 Gew.Teile, vorzugsweise 15 bis 40 Gew.Teile, pro 100 Gew.Teile Pfropfcopolymer beträgt.

5. Verfahren nach einem der Ansprüche 1 bis 4, dadurch gekennzeichnet, daß der Kautschukgehalt von A.2. 15 bis 50 Gew.Teile. vorzugsweise 15 bis 40 Gew.Teile, pro 100 Gew.Teile Pfropfcopolymer beträgt.

**Revendications pour les Etats Contractants: BE, CH, DE, FR, GB, IT, LI, NL, SE**

1. Composition polymère à base d'un polycarbonate, un copolymère greffé et un polyuréthane, caractérisée en ce qu'elle comprend:

A. 5 à 90% en poids d'une combinaison de:

A.1. un ou plusieurs copolymère(s) greffé(s) qu'on obtient en polymérisant 10 à 90 parties en poids d'un mélange de monomères comprenant 20 à 40% en poids d'un composé acrylique, 60 à 80% en poids d'un composé vinylaromatique et 0 à 20% en poids d'un ou plusieurs composés insaturés en présence de 10 à 90 parties en poids de caoutchouc, et

A.2. un ou plusieurs copolymère(s) greffé(s) qu'on obtient en polymérisant 10 à 90 parties en poids d'un mélange de monomères comprenant 20 à 40% en poids d'un composé acrylique, 60 à 80% en piods d'un composé vinylaromatique et 0 à 20% en poids d'un ou plusieurs autres composé(s) insaturé(s), en présence de 10 à 90 parties en poids de caoutchouc, la différence des teneurs en caoutchouc dans les composants A.1. et A.2. étant d'au moins 5 parties en poids par 100 parties en poids du copolymère geffé,

B. 0 à 70% en poids d'un ou plusieurs copolymère(s) qu'on obtient en polymérisant 60 à 80 parties en poids de composés vinylaromatiques, 20 à 40 parties en poids de composés acryliques, 0 à 20 parties en poids d'un ou plusieurs autre(s) composé(s) insaturé(s).

C. 5 à 90% en poids d'un ou plusieurs polycarbonate(s) et

D. 0,5 à 25% en poids d'un ou plusieurs polyuréthane(s).

2. Composition polymère selon la revendication 1, caractérisée en ce que le composé acrylique dans A et/ou B est l'acrylonitrile.

3. Composition polymère selon la revendication 1 ou 2, caractérisée en ce que le composé vinylaromatique dans A et/ou B est le styrène et/ou l'alphaméthylstyrène.

4. Composition polymère selon l'une quelconque des revendications 1 à 3, caractérisée en ce que la teneur en caoutchouc dans A.1. est comprise entre 15 et 50 parties en poids, de préférence entre 15 et 40 parties en poids par 100 parties en poids du copolymère greffé.

5. Composition polymère selon l'une quelconque des revendications 1 à 4, caractérisée en ce que la teneur en caoutchouc dans A.2. est comprise entre 15 et 50 parties en poids, de préférence entre 15 et 40 parties en poids par 100 parties en poids de copolymère greffé.

## Revendications pour l'Etat Contractant: AT

1. Procédé de préparation d'une composition polymère à base d'un polycarbonate, un copolymère greffé et un polyuréthane, caractérisé en ce qu'on prépare la composition polymère en combinant:

A. 5 à 90% en poids d'une combinaison de:

A.1. un ou plusieurs copolymère(s) greffé(s) qu'on obtient un polymérisant 10 à 90 parties en poids d'un mélange de monomères comprenant 20 à 40% en poids d'un composé acrylique, 60 à 80% en poids d'un composé vinylaromatique et 0 à 20% en poids d'un ou plusieurs composés insaturés en présence de 10 à 90 parties en poids de caoutchouc, et

A.2. un ou plusieurs copolymère(s) greffé(s) qu'on obtient en polymérisant 10 à 90 parties en poids d'un mélange de monomères comprenant 20 à 40% en poids d'un composé acrylique, 60 à 80% en poids d'un composé vinylaromatique et 0 à 20% en poids d'un ou plusieurs autres composé(s) insaturé(s), en présence de 10 à 90 parties en poids de caoutchouc, la différence des teneurs en caoutchouc dans les composants A.1. et A.2. étant d'au moins 5 parties en poids par 100 parties en poids du copolymère greffé.

B. 0 à 70% en poids d'un ou plusieurs copolymère(s) qu'on obtient en polymérisant 60 à 80 parties en poids de composés vinylaromatiques, 20 à 40 parties en poids de composés acryliques, 0 à 20 parties en poids d'un ou plusieurs autre(s) composé(s) insaturé(s).

C. 5 à 90% en poids d'un ou plusieurs polycarbonate(s), et

D. 0,5 à 25% en poids d'un ou plusieurs polyuréthane(s).

2. Procédé selon la revendication 1, caractérisé en ce que le composé acrylique dans A et/ou B est l'acrylonitrile.

3. Procédé selon la revendication 1 ou 2, caractérisé en ce que le composé vinyl aromatique dans A et/ou B est le styrène et/ou l'alpha-méthylstyrène.

4. Procédé selon l'une quelconque des revendications 1 à 3, caractérisé en ce que la teneur en caoutchouc dans A.1. est comprise entre 15 et 50 parties en poids, de préférence entre 15 et 40 parties en poids, par 100 parties en poids du copolymère greffé.

5. Procédé selon l'une quelconque des revendications 1 à 4, caractérisé en ce que la teneur en caoutchouc dans A.2. est comprise entre 15 et 50 parties en poids, de préférence entre 15 et 40 parties en poids par 100 parties en poids du copolymère greffé.